# EUROPÄISCHE PATENTSCHRIFT

(11) **EP 0 500 616 B1**
(45) Veröffentlichungstag und Bekanntmachung des Hinweises auf die Patenterteilung: **07.01.1998**
(21) Anmeldenummer: 90916236.4
(22) Anmeldetag: 06.11.1990
(51) Int. Cl.: C23C 18/30

(54) **KOMPLEXVERBINDUNGEN MIT OLIGOMEREM BIS POLYMEREM CHARAKTER**
OLIGOMERIC TO POLYMERIC CHARACTER COMPLEXES
COMPOSES COMPLEXES DE CARACTERE OLIGOMERE A POLYMERE

(30) Priorität: 17.11.1989 DE 3938710
(43) Veröffentlichungstag der Anmeldung: 02.09.1992
(73) Patentinhaber: ATOTECH Deutschland GmbH, 10553 Berlin (DE)
(72) Erfinder: STAMP, Lutz, D-1000 Berlin 41 (DE); ZETTELMEYER-DECKER, Elisabeth, D-1000 Berlin 12 (DE); MEYER, Heinrich, D-1000 Berlin 31 (DE); URRUTIA DESMAISON, Gonzalo, D-1000 Berlin 10 (DE)
(74) Vertreter: Effert, Udo, Dipl.-Ing.
(86) Internationale Anmeldenummer: DE9000845
(87) Internationale Veröffentlichungsnummer: WO9107522

(56) Entgegenhaltungen:
- EP-A- 367 885
- EP-A- 0 317 092
- DE-A- 1 618 299
- DE-A- 2 116 389
- US-A- 4 533 502

## Beschreibung

Die Erfindung betrifft neueKomplexverbindungen, deren Lösungen zum Erzeugen von Metallkeimen (nach entsprechender Reduktion) auf insbesondere nichtmetallischen Oberflächen eingesetzt werden können. Diese Bekeimung von Substratoberflächen dient häufig der anschließenden chemischen Metallisierung (gegebenenfalls mit galvanischer Verstärkung) von Nichtleitern. Insbesondere bei der Herstellung von gedruckten Schaltungen für die Elektronik-Industrie ist dieser Verfahrensschritt von großer Bedeutung.

Weitere Einsatzgebiete sind die dekorative und funktionelle Metallisierung, zum Beispiel in der Auto- und Armaturenindustrie sowie in der Elektronik-Industrie die Herstellung von Chip-Carriern, Hybrid-Schaltungen, optischen Datenträgern sowie Gehäuse- und Komponenten-Shielding.

Zum Bekeimen von nichtleitenden Substraten sind zwei grundsätzlich verschiedene Verfahren bekannt geworden. Das eine geht von einer Lösung, die kolloidale Metallpartikel enthält, aus und bringt diese als Keime direkt auf die Substratoberfläche.

Das andere Verfahren enthält das Metall in Form einer löslichen Verbindung und bringt das Metall zunächst in dieser Form auf die Oberfläche. In einem separaten Reduktionsschritt wird die zunächst aufgebrachte Metallverbindung reduziert, und die Metallkeime werden direkt auf der Oberfläche gebildet.

Ein Nachteil der bekannten Methoden besteht jedoch zum Beispiel darin, daß bei getrennter Verwendung von zum Beispiel Palladiumchlorid als Edelmetallsalz und von Zinn(II)-chlorid als Reduktionsmittel nur die Aktivierung von unkaschiertem, das heißt kupfermetallfreiem Trägermaterial, möglich ist, da andernfalls eine Ausfällung (Zementation) des Edelmetalls auf der Kupferkaschierung erfolgen würde.

Auch adsorbieren einfache Metallsalze und monomere Metallkomplexe auf vielen Materialien nicht besonders gut, beziehungsweise nur dann ausreichend, wenn in den Lösungen sehr hohe Konzentrationen der Metallverbindung vorliegen. Auf diese Weise auf eine Oberfläche aufgebrachte Adsorbate desorbieren aber sehr leicht wieder (zum Beispiel bei Spülvorgängen) und haften also nicht sehr fest auf den Oberflächen.

Aktivierungslösungen, welche sowohl das Edelmetallsalz als auch das Reduktionsmittel enthalten (sogenannte kolloidale Aktivatoren), weisen andererseits den Nachteil einer besonderen Empfindlichkeit gegenüber Fremdionen und sonstigen Verunreinigungen auf, welche zu einer irreversiblen Koagulation des Edelmetalls führen. Auch sind solche Aktivierungslösungen, in denen Zinn(ll)-Verbindungen gleichzeitig als Reduktionsmittel und Schutzkolloid fungieren, gegenüber einer Oxidation durch Luftsauerstoff instabil und erfordern das ständige kontrollierte Nachdosieren des Reduktionsmittels.

Diese Aktivierungslösungen haben weiterhin den Nachteil, daß sie bei stark saurem pH-Wert arbeiten. Dies führt bei Multilayern häufig zu einer Schädigung der Black/Brown-Oxid-Schicht im Bereich der Bohrlöcher und damit zum Auftreten des sogenannten Red-Ring-Phänomens.

In EP 0 317 092 A1 sind mehrkernige Palladiumkomplexe mit bestimmten Stickstoff enthaltenden Ligandenverbindungen offenbart, beispielsweise mit 2-Hydroxypyridin, 2-Aminopyridin und 2-Methylpyridin. Nach Angaben in dieser Patentanmeldung lassen sich hiermit unter alkalischen Bedingungen wasserlösliche, stabile und sehr aktive Metallaktivatoren herstellen.

Allen bisher technisch eingesetzten Aktivatorlösungen gemeinsam ist der Nachteil, daß sie nur in einem recht kleinen pH-Bereich arbeiten und deshalb aufwendiger Kontrollen und Überwachung bedürfen.

Die Erfindung hat die Aufgabe, Substanzen für eine stabile Aktivierungslösung aufzuzeigen, die die zu metallisierenden Basismaterialien und insbesondere ihre Verbundstellen nicht schädigt, die einfach anzuwenden ist und die ein ausgeprägtes Adsorptionsvermögen für alle nichtmetallischen Basismaterialien aufweist.

Diese Aufgabe wird erfindungsgemäß durch Komplexverbindungen des Palladiums mit mindestens einem organischen Liganden, wobei der Komplex in einer oligomeren bis polymeren mehrkernigen Form vorliegt und der organische Ligand heterocyclische Stickstoffverbindungen umfaßt, ausgewählt aus der Gruppe, bestehend aus Pyridazinen, Pyrimidinen, Pyrazinen, Cinnolinen, Chinolinen, Phthalazinen, Piperazinen, 2,2'-Dipyridyl, 5-Amino-3,4-dimethylisoxazol, 2-Amino-4,6-dimethylpyridin, 2-Amino-6-methylpyridin, 2-Amino-3-methylpyridin, 3-Ethylpyridin, 3-Hydroxymethylpyridin, N-Acetyl-6-methyl-2-aminopyridin sowie eine diese Komplexverbindungen enthaltende Aktivatorlösung zur Aktivierung von nichtmetallischen Substraten gelöst.

Ein besonders geeignetes Cinnolin ist Cinnolinhydrochlorid, und ein besonders geeignetes Pyrimidin ist 2-Amino-4-hydroxy-6-methylpyrimidin.

Die Komplexverbindungen enthalten bevorzugt solche Ligandenverbindungen, die neben der Funktionalität, die für die Bindung an das Metall benötigt wird, noch eine weitere polare funktionelle Gruppe zur Haftvermittlung an das Substrat enthält.

Das Verhältnis des Metalls zur Ligandenverbindung im Komplex beträgt vorzugsweise 5:1 bis 1:8 und in einer besonders vorteilhaften Ausführungsform 2:1 bis 1:2.

Weitere vorteilhafte Ausführungsformen sind in den Unteransprüchen beschrieben.

Monomere Komplexe des Palladiums und anderer Metalle, die neben den erfindungsgemäßen Liganden noch weitere Liganden, wie zum Beispiel Solvensmoleküle oder hiervon durch zum Beispiel Protonierung oder Deprotonierung abgeleitete lonen enthalten, lassen sich überraschenderweise zu stabilen Lösungen von oligomeren Metallkomplexen in der Form umsetzen, daß eine Verbindung über diese Moleküle oder hiervon abgeleitete lonen eintritt. Die einzelnen Metallzentren sind also durch jeweils einzelne, als Brückenligand koordinierte Moleküle oder lonen verbunden. Diese Komplexe unterscheiden sich demgemäß grundlegend in ihrer chemischen Struktur und in ihren Eigenschaften von Komplexen, in denen Metallatome an oligomere/polymere organische Moleküle gebunden sind, wie sie zum Beispiel in EP 0 082 438 beschrieben sind.

Die erfindungsgemäßen oligomeren Metallkomplexe zeigen ein außergewöhnliches Adsorptionsvermögen auf fast allen nichtmetallischen Materialien, wie zum Beispiel den für die Leiterplattenherstellung wichtigen Materialien Epoxidharz, Polyimid und Glas, aber auch auf anderen Kunststoffen wie zum Beispiel Acrylnitril-Butadien-Styrol Copolymerisaten (ABS), Polyamid, Polycarbonat, Polyphenylenoxid, Polyethersulfon, Polyetherimid und auf Keramiken aus zum Beispiel Aluminiumoxid und Aluminiumnitrid sowie auf Mischungen dieser Materialien. Bereits aus verdünnten Lösungen heraus findet eine ungewöhnlich starke und feste Belegung der Oberfläche von Nichtmetallen statt. Auf metallischen Oberflächen wie Kupfer findet dagegen kaum eine Adsorption und insbesondere auch keine zementative Metallabscheidung statt. Aus diesem Grund lassen sich die erfindungsgemäßen Komplexe auch hervorragend in Verfahren für die Metallisierung von Nichtmetall-Metall-Verbundwerkstoffen einsetzen.

Der erfindungsgemäß verwendete Aktivator vermeidet also alle Nachteile, die mit den herkömmlichen Systemen hingenommen werden müssen. Durch seine oligomere Struktur zeigt er eine hohe Affinität zu unterschiedlichen Basismaterialien, und die gebildeten Edelmetallkeime sind von hoher Aktivität, so daß sehr dichte Hetallüberzüge durch diese Form der Aktivierung erzielt werden können. Dies ist besonders wichtig in unterschiedlichsten Anwendungen: Bei der Metallisierung von beliebigen Kunststoffteilen, die zum Beispiel infolge unterschiedlicher Verarbeitungsbedingungen heterogene Oberflächen aufweisen oder von Teil zu Teil verschiedene Oberflächenmorphologien haben, ist eine sehr dichte und aktive Aktivierungsbelegung wichtig und wird mit den erfindungsgemäßen Komplexen erreicht. In der Elektronikanwendung wird die Zuverlässigkeit elektrischer Schaltungen von der dichten und haftfesten Metallbelegung von Durchgangsbohrungen durch das seiner chemischen Natur nach von Fall zu Fall unterschiedliche Kunststoffsubstrat bestimmt, so daß auch hier eine hohe Aktivität und hohe Belegungsdichte der Metallpartikel des Aktivatorsystems, die aus den erfindungsgemäßen Metallkomplexen in der beschriebenen Weise entstehen, erforderlich ist. Insbesondere gilt dies auch für die unterschiedlichen Materialien in diesen Verbundsubstraten, wie sie zum Beispiel in den hochkomplizierten Mehrlagenschaltungen für die Elektronikindustrie vorkommen.

Solche Aktivatoren greifen Basismaterialien und insbesondere deren Verbindungen nicht an, da sie halogenfrei hergestellt und in einem weiten pH-Bereich von alkalisch bis schwach sauer betrieben werden können.

Die Lösungen solcher Aktivatoren sind sehr stabil, Standzeiten von bis zu mehreren Jahren können erreicht werden, bevor ein Neuansatz erforderlich wird. Besonders hervorzuheben ist die Unempfindlichkeit gegenüber einer Oxidation durch Luftsauerstoff, deren Bedeutung in letzter Zeit stark zugenommen hat und die noch weiter zunehmen wird, da in modernen Fertigungslinien die Behandlungslösungen über Schwall oder Spritzdüsen appliziert werden.

Hierdurch entsteht zwangsweise ein sehr inniger Kontakt der Aktivierungslösung mit Luftsauerstoff. Lösungen, wie zum Beispiel Zinn(II)-Verbindungen enthaltende Aktivatoren, die unter diesen Bedingungen oxidiert werden und damit unbeständig sind, können also in solchen modernen Anlagen nicht eingesetzt werden. Der erfindungsgemäße Aktivator, der völlig inert gegenüber einer Oxidation durch Luftsauerstoff ist, ist dagegen sehr gut für Einsätze im Schwall oder Spritzverfahren geeignet.

Diese Eigenschaft ist auch schon im herkömmlichen Tauchprozeß ein deutlicher Vorteil gegenüber anderen, bekannten Verfahren. Es müssen keine Chemikalien ergänzt werden, weil sie durch Luftoxidation verbraucht werden.

Lösungen derartiger oligomerer Metallkomplexe eignen sich daher ganz besonders zur Aktivierung von Basismaterialien für den Aufbau von Leiterbahnen und zur Aktivierung von Bohrlöchern zum Zweck der Durchkontaktierung bei der Herstellung von gedruckten Schaltungen.

Die Anwendung der Lösungen der oligomeren/polymeren Metallkomplexe geschieht in der Form, daß die zu bekeimenden Materialien/Gegenstände in der Regel zunächst einer Vorbehandlung unterzogen werden, die dazu dient, die Oberflächen zu reinigen und/oder durch mechanische oder chemische Beeinflussung die Bereitschaft zur Adsorption an diese Oberfläche zu fördern. Die zu bekeimenden Materialien/Gegenstände werden dann im eigentlichen Aktivierungsschritt mit einer Lösung der erfindungsgemäßen oligomeren/polymeren Metallkomplexe behandelt. Dies kann zum Beispiel durch Tauchen, aber auch durch Sprühen oder Schwallen oder andere Verfahren geschehen. Die Einwirkzeit der Lösung auf die Oberfläche kann zwischen 10 sec und 30 min liegen. Hierbei findet eine feste Adsorption des Metallkomplexes an die Oberfläche statt. Überschüssige Lösung wird anschließend in einem Spülschritt (zum Beispiel in einer Standspüle, Fließspüle oder Spritzspüle) entfernt.

Der adsorbierte Metallkomplex bleibt dabei fest auf der Oberfläche des zu aktivierenden Substrates haften. Als nächstes wird das Substrat (ca. 10 sec bis 30 min) mit einer Lösung eines Reduktionsmittels behandelt. Dieses kann wiederum zum Beispiel durch Tauchen, Spülen oder Schwallen geschehen. Hierbei wird der adsorbierte Komplex durch Reduktion zerstört, und es werden hochaktive Metallkeime gebildet, die fest auf der Substratoberfläche haften. Überschüssiges Reduktionsmittel kann anschließend abgespült werden.

Gut geeignete Reduktionsmittel hierfür sind zum Beispiel Borhydride wie NaBH₄ oder Boran-Amin-Komplexe, insbesondere Dimethylaminboran, Phosphinsäure oder deren Salze, Formaldehyd, Hydrazin oder andere und Mischungen dieser Reduktionsmittel. Bei der Wahl geeigneter Komplexliganden kann auch das Reduktionsmittel des anschließend verwendeten stromlosen Elektrolyten zur Reduktion verwendet werden. Der Komplex zerfällt hierbei in lösliche Bestandteile und hochaktive Metallpartikel.

Erheblichen Einfluß auf die Aktivität der entstehenden Metallpartikel hat der Oligomerisationsgrad des jeweiligen Metallkomplexes, da hierdurch die Größe und Morphologie der bei der Reduktion gebildeten Metallpartikel wesentlich mitbestimmt wird. Der Oligomerisationsgrad der Komplexverbindungen beträgt 3 bis 10.000 der monomeren Einheiten, besonders geeignet sind Komplexverbindungen mit 5 bis 500 monomeren Einheiten.

Der oligomere Charakter der gebildeten Moleküle läßt sich zum Beispiel mit Hilfe von Streulicht-Messungen nachweisen. Auch die Ermittlung eines mittleren Oligomerisationsgrades ist auf diese Art und Weise möglich. Die Größe der oligomeren Moleküle kann durch die Reaktionsbedingungen, die bei ihrer Bindung angewandt werden (Zeit, Temperatur, Konzentration, pH), und die Natur des Edelmetallions und dessen Liganden reguliert werden. Durch eine geeignete Kombination der Parameter kann das gewünschte Molekulargewicht erreicht werden.

Die mit diesen oligomeren Komplexen hergestellten Aktivierungsbäder lassen sich dann je nach den Erfordernissen bei den unterschiedlichsten Bedingungen zum Einsatz bringen. Ihre Wirkungsweise ist über einen weiten Arbeitsbereich (insbesondere des pH-Wertes) gegeben. Durch diese Robustheit der mit den erfindungsgemäßen Aktivatoren angesetzten Bäder kann auch der Überwachungsaufwand auf einem sehr niedrigen Niveau gehalten und damit Kosten eingespart werden, ohne daß Qualitätseinbußen in der Produktion zu befürchten wären. Die mit Hilfe der Aktivatoren, die aus den erfindungsgemäßen Komplexverbindungen hergestellt werden, erzielte Aktivierung von nichtmetallischen Substraten kann verwendet werden zur stromlosen Metallisierung mit unterschiedlichsten Metallüberzügen, die ihrerseits wiederum auf galvanischem oder außenstromlosem Wege metallisiert werden können. Als Metalle, die über die erfindungsgemäße Aktivierung auf die Substrate gebracht werden können, sind neben Kupfer und Nickel auch Gold, Palladium, Silber, Cobalt, Zinn oder deren Legierungen untereinander, beziehungsweise auch mit Elementen wie Phosphor oder Bor wie bei den Systemen Ni/P und Ni/B, zu nennen.

Weiterhin hat sich herausgestellt, daß auch andere Substanzen, die bei der Herstellung von Lösungen der oligomeren / polymeren Komplexverbindungen aus technischen Gründen zugesetzt werden, einen positiven oder negativen Einfluß auf die Eignung dieser Lösungen zur Aktivierung nichtmetallischer Substrate haben können, Insbesondere sind hier Substanzen zur Pufferung des Systems bei bestimmten pH-Werten zu nennen, wie zum Beispiel Borate, Karbonate, Phosphate und Acetate. Auch die Art der bei der Herstellung verwendeten Säure (zum Beispiel Salzsäure, Schwefelsäure, Essigsäure) kann von Bedeutung sein. So verbessert im Beispiel 1 (siehe unten) die bei der Herstellung zugegebene Borsäure die Wirkung der erhaltenen Aktivatorlösung deutlich gegenüber einer Lösung, die ohne diesen Zusatz oder mit zum Beispiel einem Phosphat als Puffer hergestellt wurde. Das Auftreten eines positiven oder negativen Einflusses ist jedoch nicht ohne weiteres vorherzusehen und muß in jedem Einzelfall bestimmt werden.

Besonders günstig ist es, die Herstellung der erfindungsgemäßen oligomeren Metallkomplexe bereits in dem Lösungsmittel (beziehungsweise einer der Lösungsmittelkomponenten) durchzuführen, das später auch bei der Anwendung als Lösung zur Aktivierung eingesetzt werden soll. In diesem Fall ist es nicht erforderlich, (Zwischen)-Produkte zu isolieren, und die Herstellung der Aktivatorlösungen ist besonders einfach. Im Folgenden ist beispielhaft ein Herstellungsverfahren beschrieben, nach dem die erfindungsgemäßen oligomeren Metallkomplexe prinzipiell hergestellt werden können (aber auch andere Herstellungsmethoden sind möglich). Zu einem Salz oder einer geeigneten AusgangsKomplexverbindung des jeweiligen Metalls in geeigneten Lösungsmitteln wie Wasser oder organischen Lösungsmitteln, wie aliphatischen Alkoholen, Alkoholethern wie zum Beispiel Ethylenglykolmonoethern oder Ethern, wie zum Beispiel Ethylenglykoldiethern oder deren Mischungen, wird die berechnete Menge des Liganden zugegeben.

In vielen Fällen tritt spontan die gewünschte Komplexbildung ein, andernfalls bringt man die Lösung auf die zum Einsatz einer Reaktion erforderliche Temperatur. Nach Ende der Reaktion kann der monomere Komplex zum Beispiel durch Verdampfen des Lösungsmittels isoliert werden. Zur Herstellung einer Lösung des entsprechenden oligomeren Komplexes löst man den monomeren Komplex in dem gewünschten Lösungsmittel, stellt die erforderlichen Reaktionsparameter, insbesondere den pH-Wert, auf die für das jeweilige Produkt erforderlichen Werte ein und erhitzt die Lösung bis zur Einstellung des Gleichgewichts (in der Regel einige Stunden) auf circa 50 bis 70 °C. Eine Abtrennung der entstandenen oligomeren/polymeren Komplexe aus der Lösung ist in der Regel nicht möglich. Die für eine Isolierung der Komplexe in fester Form anzuwendenden Bedingungen führen in der Regel zu einer Veränderung der Größe und chemischen Struktur der Moleküle. Deshalb kann eine Charakterisierung auch nur durch spektroskopische oder andere in situ Methoden in der Lösung erfolgen. Die Struktur der hierbei entstehenden oligomeren Verbindungen ist sehr wahrscheinlich durch die Metallatome verbrückende Liganden und/oder Solvensmoleküle beziehungsweise -ionen gekennzeichnet, so daß ein langes Band entsteht. Allerdings ist die Kenntnis der exakten Struktur nicht erheblich für die Wirkungsweise der Komplexe als Aktivatoren, so daß sie nicht Inhalt des Patentgedankens ist. Als Metalle kommen Cu, Ag, Au, Ni, Pd, Pt, Ru, Rh, Os, Ir in Frage. Als Ausgangskomplexverbindung für die Herstellung der erfindungsgemäßen Komplexverbindungen können die Metalle selbst, ihre Salze oder andere Komplexverbindungen der entsprechenden Elemente verwendet werden. Als Liganden für die Herstellung der erfindungsgemäßen Komplexverbindungen werden Verbindungen verwendet, die typischerweise monomere Komplexe mit Metallionen bilden. Vorzugsweise werden Verbindungen mit einem oder mehreren N-, O-, S-oder P-Atomen oder einer oder mehreren Mehrfachbindungen beziehungsweise auch gleichzeitig mehreren dieser Elemente eingesetzt. Insbesondere eignen sich hierbei Verbindungen aus der Gruppe der Stickstoff- Heterozyclen, zum Beispiel Pyridine, Pyridazine, Pyrimidine, Pyrazine, Chinoline, Cinnoline oder Phtalazine.

Die erfindungsgemäßen Komplexe werden für den Einsatz als Aktivatoren in den Lösungsmitteln in Konzentrationen von 1 bis 10.000 mg/l, vorzugsweise in Konzentrationen zwischen 20 und 500 mg/l gelöst. Maßgeblich für die optimale Konzentration ist je nach Anwendung, Wahl der Verfahrensparameter wie Temperatur, Behandlungszeit usw., Substrattyp und Art des Komplexes, dessen ausreichende Absorption auf dem zu aktivierenden Substrat.

Als Lösungsmittel für die Anwendung der erfindungsgemäßen oligomeren /polymeren Metallkomplexe können prinzipiell alle Lösungsmittel oder Lösungsmittelgemische dienen, welche eine für die Entfaltung der Wirkung ausreichende Löslichkeit besitzen. Besonders bevorzugt ist es, daß gleiche Lösungsmittel wie für die Herstellung zu verwenden; also ein Lösungsmittel aus der Gruppe der Alkohole, Glykole, Alkoholether oder Ether, insbesondere aber Wasser.

Der pH-Wert der zur Aktivierung eingesetzten Lösungen kann zwischen 1 und 14, bevorzugt zwischen 5 und 12, liegen. Er kann durch Zugabe von Säuren, wie zum Beispiel Schwefelsäure, Salzsäure, Salpetersäure, Phosphorsäure oder Essigsäure, beziehungsweise - je nach angestrebtem pH-Wert - durch Zugabe von Laugen, wie zum Beispiel Natronlauge, Kalilauge oder Ammoniak, auf den gewünschten Wert eingestellt werden.

Die folgenden Beispiele beschreiben die Herstellung einiger Lösungen zur Aktivierung nichtmetallischer Oberflächen, die erfindungsgemäße oligomere/polymere Metallkomplexe enthalten. Zusätzlich sind charakteristische Banden der UV-VIS-Spektren dieser Lösungen angegeben (Wellenlänge des Maximums der Absorption in nm, s = Schulter).

### Beispiel 1:

Zu 400 ml Wasser werden 10 ml einer Lösung von Palladiumsulfat in 35%iger Schwefelsäure (= 0,95 g PdSO₄ = 4,7 mmol) und 0,54 g (5 mmol) 2-Amino-6-methyl-pyridin hinzugegeben und verrührt, bis sich eine homogene orangefarbene Lösung gebildet hat. Daraufhin werden langsam unter Rühren 8,4 g (0,15 mol) Kaliumhydroxid hinzugefügt. Hierbei färbt sich die Lösung bräunlichrot. Es wird bis zur vollständigen Auflösung des Kaliumhydroxids nachgerührt. Die Zugabe des Kaliumhydroxids muß dabei so langsam erfolgen, daß die Wärmeentwicklung kontrollierbar bleibt. Anschließend werden 5 g (0.08 mol) Borsäure zugegeben, und es wird bis zur völligen Auflösung gerührt. Der pH-Wert der so erhaltenen Lösung wird durch Zugabe von Natronlauge beziehungsweise Schwefelsäure auf 10 eingestellt und das Volumen auf 0,5 l aufgefüllt. Die so erhaltene Lösung wird circa 6 Stunden auf 50 bis 60 °C erwärmt. Dabei wird der Farbton der Lösung dunkler und verschiebt sich zu einem rötlichen Braunton, die Lösung bleibt jedoch klar. Durch diese Farbverschiebung und -vertiefung wird der stattfindende Oligomerisations/Polymerisationsprozeß optisch erkennbar. Nach einer Verdünnung mit Wasser auf 2,5 bis 5 l (entsprechend einem Palladiumgehalt von 100 bis 200 mg/l) ist die Lösung zur Aktivierung von Substraten für die Herstellung von Leiterplatten für die Elektronikindustrie einsatzbereit. Wird ein Arbeits- pH-Wert gewünscht, der von dem sich durch die Verdünnung ergebenden abweicht, wird mit Natronlauge oder Schwefelsäure entsprechend nachgestellt. UV: (250 s, 305 s, 420 s).

### Beispiel 2:

Zu 2 l Wasser werden 10 ml einer Lösung von Palladiumsulfat in Schwefelsäure ( = 0,95 g PdSO₄ = 4,7 mmol) und 0,54 g (5 mmol) 2-Amino-3-methylpyridin hinzugegeben und gerührt, bis eine klare, homogene Lösung entstanden ist. Die Lösung wird mit Natronlauge auf pH 11 eingestellt und für 6 Stunden auf 60 °C erwärmt. Nach einer eventuellen Verdünnung auf die gewünschte Palladiumkonzentration wird der angestrebte pH-Wert mit Natronlauge oder Schwefelsäure eingestellt. UV: (250 s, 305 s, 410 s).

### Beispiel 3:

10 ml einer Lösung von Palladiumsulfat in Schwefelsäure (= 0,95 g PdSO₄ = 4,7 mmol) werden zu 400 ml Wasser, in dem 0,54 g (5 mmol) 3-Ethylpyridin gelöst wurden, hinzugefügt. Unter Rühren wird anschließend 1 g Borsäure hinzugegeben und bis zur völligen Auflösung weitergerührt. Der pH-Wert der Lösung wird mit Natronlauge auf 11 eingestellt und anschließend das Volumen mit Wasser auf 500 ml aufgefüllt. Nach 24 Stunden bei 60 °C hat sich der oligomere Komplex gebildet, und die Lösung kann auf einen Palladiumgehalt von circa 150 mg/l verdünnt werden. UV: (265, 295 s).

### Beispiel 4:

0,5 g (4,7 mmol) Palladiumstaub werden mit 3 ml konzentrierter Salpetersäure versetzt und werden bis zur vollständigen Auflösung des Palladiums auf circa 90 °C erwärmt. Diese Lösung wird zu einer Lösung von 0,65 g (5 mmol) Phthalazin in 4 l Wasser hinzugefügt und verrührt. Anschließend werden 10 g (0,17 mol) Essigsäure zugesetzt und ebenfalls verrührt. Mit Natronlauge wird dann der pH-Wert auf 5 eingestellt. Nach 12 Stunden Erwärmen auf 50 °C ist die Lösung gebrauchsfertig. UV: ( 235, 255, 315, 325).

### Beispiel 5:

1,3 g (4,9 mmol) PdBr₂ werden in 10 ml 10%iger Salzsäure unter Erwärmung und Rühren gelöst. Es werden 0,43 g (5 mmol) Piperazin hinzugefügt und unter Rühren gelöst. Nach Verdünnen auf 2,5 l werden 4,2 g (0,07 mol) Essigsäure hinzugegeben und unter Rühren gelöst. Mit Natronlauge wird ein pH von 12 eingestellt. Nach 6 Stunden Erwärmen auf 60 °C ist die Lösung gebrauchsfertig. UV: (300 s).

### Beispiel 6:

0,42 g (2,4 mmol) PdCl₂ werden in einer Hischung aus 1 ml konzentrierter Salzsäure und 4 ml Wasser unter Erwärmung gelöst und anschließend auf 2 1 verdünnt und 0,27 g (2,5 mmol) 3-Hydroxymethylpyridin hinzugefügt und verrührt. Anschließend werden 10 g (0,16 mol) Borsäure hinzugegeben und bis zum vollständigen Lösen gerührt. Mit Kalilauge wird ein pH-Wert von 9,5 eingestellt, und die Oligomerisierung wird durch ein Erwärmen auf 45 °C während 36 Stunden durchgeführt. UV: (260, 320 s).

### Beispiel 7:

Zu 3 l Wasser werden 10 ml einer Lösung von Palladiumsulfat in Schwefelsäure (= 0,95 g PdSO₄ = 4,7 mmol) und 0,67 g (4 mmol) Cinnolinhydrochlorid zugegeben und bis zum vollständigen Lösen gerührt. Nach dem Lösen von 5 g (0,08 mol) Borsäure wird mit Natronlauge ein pH-Wert von 10,5 eingestellt und die Lösung anschließend für 6 Stunden auf 60 °C erwärmt. Gegebenenfalls wird auf die gewünschte Badkonzentration verdünnt. UV: (225, 315 s, 440 s).

### Beispiel 8:

Eine Lösung von 1,05 g (4,7 mmol) Palladiumacetat in 10 ml 10%iger Salzsäure wird auf 2 1 mit Wasser verdünnt und mit 0,75 g (5 mmol) N-Acetyl-6-methyl-2-aminopyridin versetzt und verrührt. Es werden 5 g (0.042 mol) Natriumdihydrogenphosphat zugesetzt und unter Rühren gelöst. Durch Zugabe von Natronlauge wird ein pH-Wert von 7 eingestellt. Die Lösung ist nach 5 Stunden bei 60 °C einsatzbereit. UV: (275, 390 s).

### Beispiel 9:

Zu 200 ml Wasser werden 10 ml einer Lösung von Palladiumsulfat in 35%iger Schwefelsäure (= 0,95 g PdSO₄ = 4,7 mmol) und 0,78 g (5 mmol) 2,2'-Dipyridyl gegeben und gerührt, bis sich eine homogene Lösung gebildet hat. Diese Lösung wird in eine Lösung von 20 g Natriumhydroxid in 5 l Wasser langsam unter innigem Rühren eingetragen. Der pH-Wert wird, falls erforderlich, anschließend auf 12 nachgestellt. Nach 5 Stunden bei 70 °C ist die Lösung einsatzbereit.
UV: (250, 303 s, 310).

### Beispiel 10:

Eine Lösung entsprechend Beispiel 9 wird hergestellt, nur daß statt Dipyridyl 0,63 g (5 mmol) 2-Amino-4-hydroxy-6-methyl-pyrimidin eingesetzt werden.
UV: ( 260 s, 305 s, 410 s).

### Beispiel 11:

Zu 4 l Wasser werden 10 ml einer Lösung von Palladiumsulfat in 35%iger Schwefelsäure (= 0,95 g PdSO₄ : = 4,7 mmol) und 0,40 g (= 5 mmol) Pyridazin gegeben und verrührt. Es werden 5 g (0,08 mol) Borsäure zugegeben, und es wird bis zur vollständigen Auflösung gerührt. Der pH-Wert der so erhaltenen Lösung wird mit Natronlauge auf 11 eingestellt. Es wird 6 Stunden auf 60 °C erwärmt. Anschließend wird die Lösung auf den gewünschten Pd-Gehalt verdünnt. UV: (240s, 275, 350 s).

### Beispiel 12:

Eine Lösung entsprechend Beispiel 11 wird hergestellt, nur daß statt Pyridazin 0,56 g (5 mmol) 5-Amino-3,4-dimethylisoxazol UV: (240 s, 280 s, 440 s) oder 0,45 g (5 mmol) DL-Alanin UV: (300 s) eingesetzt werden.

Das folgende Beispiel dient Vergleichszwecken. Es beschreibt die Herstellung einer Lösung eines monomeren Komplexes.

### Beispiel 14: (Vergleich)

Zu einer Lösung von 0,84 g (4,7 mmol) PdCl₂ in 10 ml 10%iger Salzsäure wird eine Lösung von 1,08 g (10 mmol) 2-Amino-4-methylpyridin in 10 ml Wasser zugesetzt. Es bildet sich monomeres Dichloro-bis-(2-Amino-4-methylpyridin) Palladium (II), das abfiltriert werden kann.

Eine Lösung von 0,65 g (1,7 mmol) <(CH₃C₅H₃NNH₂)₂ Cℓ₂ Pd> in 1 l Wasser zeigt die für monomere Komplexe typischen, schlechten Adsorptionseigenschaften und ergibt keine zufriedenstellende Metallisierung, wenn es unter vergleichbaren Bedingungen wie die oligomeren/polymeren Komplexe eingesetzt wird.

### Beispiel 13:

Zu 2,5 l Wasser werden 10 ml einer Lösung von Palladiumsulfat in verdünnter Schwefelsäure (= 0,95 g PdSO₄ = 4,7 mmol) und 0,61 g (5 mmol) 2-Amino-4,6-dimethylpyridin hinzugegeben. Nachdem sich eine homogene gelbe Lösung gebildet hat, wird durch Zugabe von Natronlauge ein pH-Wert von 11 eingestellt. Anschließend wird die Lösung 12 Stunden auf 60 °C erhitzt. Nach dem Erkalten verdünnt man mit Isopropanol auf 5 l. UV: (260 s, 420 s).

Das folgende Beispiel beschreibt einen möglichen Arbeitsablauf für die Metallisierung von nichtleitenden Materialien unter Verwendung von Losungen des erfindungsgemäßen oligomeren/polymeren Metallkomplexes:

### Beispiel 15:

| | |
|---|---|
| Desmear/Rückatzprozeß | optional |
| Reiniger I | |
| Spülen | |
| Reiniger II | optional |
| Spülen | |
| Ätzreiniger | |
| Spülen | |
| Vortauchlösung | |
| Aktivatorlösung | |
| Spülen | |
| Reduktor | |
| Spülen oder Nachtauchlösung | |
| chemisch Kupfer | |
| Spülen | |
| galvanisch Kupfer | optional |

Die Lösungen der Beispiele 1 bis 13 ergeben nach diesem Verfahren eine gute bis exzellente Bedeckung des nichtmetallischen Substrates mit Metall (Durchlichttest). Dagegen ergibt die Lösung eines monomeren Komplexes entsprechend Beispiel 14 nur eine sehr schlechte Bedeckung.

## Patentansprüche

1. Komplexverbindung des Palladiums mit mindestens einem organischen Liganden, dadurch gekennzeichnet, daß der Komplex in einer oligomeren bis polymeren, mehrkernigen Form vorliegt und der organische Ligand heterozyklische Stickstoffverbindungen, ausgewählt aus der Gruppe bestehend aus:
Pyridazinen,
Pyrimidinen,
Pyrazinen,
Cinnolinen,
Chinolinen
Phtalazinen,
Piperazin
2,2'-Dipyridyl,
5-Amino-3,4-dimethylisoxazol,
2-Amino-4,6-dimethylpyridin,
2-Amino-3-methylpyridin,
2-Amino-6 methylpyridin
3-Ethylpyridin,
3-Hydroxymethylpyridin,
N-Acetyl-6-methyl-2-aminopyridin
umfaßt.

2. Komplexverbindung nach Anspruch 1, dadurch gekennzeichnet, daß aus der Gruppe der Cinnoline Cinnolinhydrochlorid ausgewählt wird.

3. Komplexverbindung nach Anspruch 1, dadurch gekennzeichnet, daß aus der Gruppe der Pyrimidine 2-Amino-4-hydroxy-6-methyl-pyrimidin ausgewählt wird.

4. Komplexverbindung nach Anspruch 1, dadurch gekennzeichnet, daß der Oligomerisation- bzw. Polymerisationsgrad zwischen 3 und 10.000 liegt.

5. Komplexverbindung nach Anspruch 4, dadurch gekennzeichnet, daß der Oligomerisation- bzw. Polymerisationsgrad zwischen 5 und 500 liegt.

6. Komplexverbindung nach Anspruch 1, dadurch gekennzeichnet, daß am Aufbau des Komplexes Solvensmoleküle oder hiervon abgeleitete lonen beteiligt sind.

7. Komplexverbindung nach Anspruch 6, dadurch gekennzeichnet, daß Solvensmoleküle oder hiervon abgeleitete lonen die verbrückenden Liganden sind.

8. Komplexverbindung nach Anspruch 1, dadurch gekennzeichnet, daß der organische Ligand neben der Funktionalität, die für die Bindung an das Metall benötigt wird, noch eine weitere polare funktionelle Gruppe zur Haftvermittlung an das Substrat enthält.

9. Komplexverbindung nach Anspruch 1, dadurch gekennzeichnet, daß das Verhältnis Metall zu Ligand 5:1 bis 1:8 beträgt.

10. Komplexverbindung nach Anspruch 9, dadurch gekennzeichnet, daß das Verhältnis Metall zu Ligand 2:1 bis 1:2 beträgt.

11. Aktivatorlösung zur Aktivierung von nichtmetallischen Substraten für die spätere stromlose Metallisierung, dadurch gekennzeichnet, daß diese eine Komplexverbindung nach Anspüchen 1 bis 10 in Wasser, einem Lösungsmittel oder einer Mischung aus Wasser und einem Lösungsmittel gelöst, enthält.

## Claims

1. Complex compound of palladium, having at least one organic ligand, characterised in that the complex is in an oligomeric to polymeric, polynuclear form, and the organic ligand includes heterocyclic nitrogen compounds, selected from the group comprising:
pyridazines,
pyrimidines,
pyrazines,
cinnolines,
quinolines,
phthalazines,
piperazine,
2,2'-dipyridyl,
5-amino-3,4-dimethylisoxazol,
2-amino-4,6-dimethylpyridine,
2-amino-3-methylpyridine,
2-amino-6-methylpyridine,
3-ethylpyridine,
3-hydroxymethylpyridine, and
N-acetyl-6-methyl-2-aminopyridine.

2. Complex compound according to claim 1, characterised in that cinnoline hydrochloride is selected from the group of cinnolines.

3. Complex compound according to claim 1, characterised in that 2-amino-4-hydroxy-6-methyl-pyrimidine is selected from the group of pyrimidines.

4. Complex compound according to claim 1, characterised in that the degree of oligomerisation and/or respectively polymerisation lies between 3 and 10,000.

5. Complex compound according to claim 4, characterised in that the degree of oligomerisation and/or respectively polymerisation lies between 5 and 500.

6. Complex compound according to claim 1, characterised in that solvent molecules or ions derived therefrom form part of the structure of the complex.

7. Complex compound according to claim 6, characterised in that solvent molecules or ions derived therefrom are the bridging ligands.

8. Complex compound according to claim 1, characterised in that, in addition to the functionality which is required for bonding with the metal, the organic ligand also contains an additional polar functional group for bonding with the substrate.

9. Complex compound according to claim 1, characterised in that the ratio of metal to ligand is between 5:1 and 1:8.

10. Complex compound according to claim 9, characterised in that the ratio of metal to ligand is between 2:1 and 1:2.

11. Activator solution for activating non-metallic substrates for the subsequent currentless metallisation, characterised in that said solution contains a complex compound according to claims 1 to 10 dissolved in water, a solvent or a mixture of water and a solvent.

## Revendications

1. Composé complexe de palladium avec au moins un ligand organique, caractérisé en ce que ledit complexe se présente sous une forme polynucléaire allant de oligomère à polymère, et en ce que ledit ligand organique comprend des composés hétérocycliques de l'azote choisis dans le groupe comprenant :
les pyridazines,
les pyrimidines,
les pyrazines,
les cinnolines,
les chinolines,
les phtalazines,
la pipérazine,
le 2,2'-dipyridyle,
le 5-amino-3,4-diméthylisoxazole,
la 2-amino-4,6-diméthylpyridine,
la 2-amino-3-méthylpyridine,
la 2-amino-6-méthylpyridine,
la 3-éthylpyridine,
la 3-hydroxyméthylpyridine,
la N-acétyl-6-méthyl-2-aminopyridine.

2. Composé complexe selon la revendication 1, caractérisé en ce que, dans le groupe des cinnolines, on choisit le chlorhydrate de cinnoline.

3. Composé complexe selon la revendication 1, caractérisé en ce que, dans le groupe des pyrimidines, on choisit la 2-amino-4-hydroxy-6-méthylpyrimidine.

4. Composé complexe selon la revendication 1, caractérisé en ce que le degré d'oligomérisation ou de polymérisation est compris entre 3 et 10.000.

5. Composé complexe selon la revendication 4, caractérisé en ce que le degré d'oligomérisation ou de polymérisation est compris entre 5 et 500.

6. Composé complexe selon la revendication 1, caractérisé en ce que des molécules de solvant ou des ions dérivés de celles-ci prennent part à la constitution dudit complexe.

7. Composé complexe selon la revendication 6, caractérisé en ce que des molécules de solvant ou des ions dérivés de celles-ci constituent les ligands de pontage.

8. Composé complexe selon la revendication 1, caractérisé en ce que le ligand organique, outre la fonctionnalité nécessaire pour la liaison avec le métal, contient également un autre groupe fonctionnel polaire destiné à assurer l'adhésion sur le substrat.

9. Composé complexe selon la revendication 1, caractérisé en ce que le rapport du métal sur le ligand est compris entre 5/1 et 1/8.

10. Composé complexe selon la revendication 9, caractérisé en ce que le rapport du métal sur le ligand est compris entre 2/1 et 1/2.

11. Solution d'activateur destinée à activer des substrats non métalliques pour une métallisation ultérieure sans courant, caractérisée en ce que ladite solution contient un composé complexe selon les revendications 1 à 10 en solution dans de l'eau, dans un solvant ou dans un mélange d'eau et d'un solvant.
